Europäisches Patentamt

European Patent Office

Office européen des brevets

(19)

(11) Veröffentlichungsnummer: **0 013 410**

**A1**

(12) # EUROPÄISCHE PATENTANMELDUNG

(21) Anmeldenummer: **79105323.4**

(22) Anmeldetag: **21.12.79**

(51) Int. Cl.³: **C 09 K 11/02**
C 09 K 11/477, H 01 J 9/227
H 01 J 29/32

(30) Priorität: **04.01.79 DE 2900209**

(43) Veröffentlichungstag der Anmeldung:
**23.07.80 Patentblatt 80/15**

(84) Benannte Vertragsstaaten:
**DE GB IT NL**

(71) Anmelder: **RIEDEL-DE HAEN AKTIENGESELLSCHAFT**
**Wunstorfer Strasse 40**
**D-3016 Seelze 1(DE)**

(72) Erfinder: **Franz, Karl, Dr.**
**Obere Mark 4**
**D-3013 Barsinghausen(DE)**

(72) Erfinder: **Schönfeld, Bernd, Dr.**
**Steinbrink 23**
**D-3052 Bad Nenndorf(DE)**

(74) Vertreter: **Meyer-Dulheuer, Karl-Hermann, Dr. et al,**
**HOECHST Aktiengesellschaft Zentrale Patentabteilung**
**Postfach 80 03 20**
**D-6230 Frankfurt/Main 80(DE)**

(54) **Verfahren zur Herstellung eines mit rotem Eisenoxid ummantelten rot emittierenden Leuchtpigmentes und seine Verwendung.**

(57) Filterleuchtpigmente bestehen aus Leuchtpigment-Teilchen, die mit einem Filtermaterial ummantelt sind. Ein bei Anregung durch Kathodenstrahlen rot emittierendes Leuchtpigment läßt sich mit rotem Eisenoxid ummanteln, indem auf den Leuchtpigment-Teilchen eine dünne Schicht aus Pyrit erzeugt und dieses anschließend in Hämatit überführt wird. Dadurch wird die Oberfläche der Leuchtpigment- Teilchen gleichmäßig mit einer geschlossenen, extrem fest haftenden Farbpigmentschicht umhüllt. Die so erhaltenen Filterleucht-pigmente finden Anwendung in Kathodenstrahlröhren.

EP 0 013 410 A1

RIEDEL-DE HAEN AG    HOE 79/D 001    Dr.EG/St

Verfahren zur Herstellung eines mit rotem Eisenoxid ummantelten rot emittierenden Leuchtpigmentes und seine Verwendung

Die Erfindung betrifft ein Verfahren zur Herstellung eines mit rotem Eisenoxid ummantelten rot emittierenden Leuchtpigmentes und seine Verwendung in Kathodenstrahlröhren, insbesondere Farbfernsehbildröhren.

Seit den grundlegenden Arbeiten von Kaplan (US-PS 2.959.483; US-PS 3.114.065 und US-PS 3.308.326) ist es bekannt, bei Anregung durch Kathodenstrahlen im sichtbaren Teil des Spektrums emittierende Leuchtpigmente zusammen mit Filterpigmenten zu verwenden. Derartige Filterpigmente lassen die von den Leuchtpigmenten emittierte, zur Nutzung vorgesehene Strahlung ohne nennenswerte Schwächung durch, während sie Strahlung anderer spektraler Zusammensetzung weitgehend absorbieren. Dadurch wird in Kathodenstrahlröhren, insbesondere in Farbfernsehbildröhren, der Bildkontrast erheblich verbessert.

Diese gemeinsame Verwendung von Leuchtpigment und Filterpigment wurde bereits von Kaplan für jede der in Farbfernsehbildröhren verwendete Leuchtpigment-Komponenten gesondert in Betracht gezogen, d.h. rotes Leuchtpigment mit einem Rot durchlassenden, alle Strahlung außer Rot absorbierenden Filterpigment, grünes Leuchtpigment mit einem Grün durchlassenden, alle Strahlung außer Grün absorbierenden Filterpigment und blaues Leuchtpigment mit einem Blau durchlassenden, alle Strahlung außer Blau absorbierenden Filterpigment. Insbesondere für die Rot- und Blaukomponenten hat dieses Prinzip weitgehende Anwendung gefunden.

Zur praktischen Durchführung dieses Prinzips wurden zunächst in Bildschirmen separate Schichten der einzelnen Pigmente aufgetragen. Es wurden jedoch auch bereits Gemische der jeweiligen Leuchtpigmente mit den zugehörigen Filterpigmenten hergestellt und dann auf Bildschirme aufgetragen (US-PS 3.114.065). Bei derartigen Gemischen ist jedoch die Haftung der Filterpigmente-Teilchen auf den Leuchtpigment-Teilchen nur gering, so daß es bei der Bildschirm-Beschichtung zu einer Durchmischung der verschiedenen Pigmente kommt. Die Folge ist eine Änderung der Filterwirkung und eine teilweise Änderung der Emissionsfarbe. Bei Farbbildröhren besteht außerdem die Gefahr, daß sich entmischte Filterpigmentpartikel in den anderen beiden Farbkomponenten ablagern und dadurch die Farbkoordinaten verändert werden.

Die weitere Entwicklung war daher darauf gerichtet, die Leuchtpigment-Teilchen einzeln mit einer möglichst fest haftenden Schicht des Filtermaterials zu ummanteln und so Filterleuchtpigmente herzustellen. Das kann z.B. dadurch erreicht werden, daß die Filterpigment-Teilchen auf der Oberfläche der Leuchtpigment-Teilchen durch Zusatz anorganischer oder organischer Bindemittel fixiert werden (z.B. US-PS 4.020.231 mit Silikat und US-PS 3.875.449 mit einem Polyvinylalkoholharz). Durch diese Maßnahmen wird zwar die Haftung verbessert, aber auch bei den auf diese Weise hergestellten Filterleuchtpigmenten lösen sich bei den in der Röhrentechnologie verwendeten Dispergier-Verfahren immer noch Filterpigment-Partikel ab. Außerdem führt die zusätzliche Ummantelung mit Bindemitteln zu einer Minderung der für die Strahlungserzeugung zur Verfügung stehenden Elektronenenergie.

Darüberhinaus wurde vorgeschlagen, das Filterpigment in dünner Schicht auf die Leuchtpigment-Teilchen aufzusintern (z.B. US-PS 3.875.449 und DE-OS 27 02 491). Die Anwendbarkeit dieses Verfahrens hängt jedoch von den Produkteigenschaften der verwendeten Stoffe ab. Schwer sinternde Filterpigmente lassen sich so nicht verarbeiten.

Als rot emittierende Leuchtpigmente finden in Farbfernsehbildröhren und auch anderen Kathodenstrahlröhren heute
fast ausschließlich mit dreiwertigem Europium aktiviertes
Yttriumoxid, Yttriumoxisulfid oder Yttriumvanadat Anwendung. Diese Leuchtstoffe zeichnen sich durch eine hohe
Lichtausbeute und ein für diese Anwendung gut geeignetes
Emissionsspektrum aus.

Als Filterpigmente sind vornehmlich rotes Cadmiumsulfoselenid und rotes Eisenoxid bekannt (US-PS 3.308.326).
Cadmiumsulfoselenid ist mit dem Nachteil der hohen Giftigkeit von Cd- und Se-Verbindungen verbunden, weswegen
vorgeschlagen wurde, dessen Verwendung durch Ausweichen
auf rotes Eisenoxid zu vermeiden (JA-OS 53 014 177).

Rotes Eisenoxid läßt sich jedoch praktisch nicht aufsintern, weil dafür so hohe Temperaturen benötigt werden,
daß hierbei eine Minderung der Strahlungsausbeute durch
Einwandern von Eisenionen in das Leuchtpigment eintritt.

Aus Oxisulfiden bestehende Leuchtpigmente werden darüberhinaus bei diesen Temperaturen auch schon zum Teil abgeröstet, was zu einer weiteren Minderung der Strahlungsausbeute führt.

Der Erfindung lag deshalb die Aufgabe zugrunde, ein bei
Anregung durch Kathodenstrahlen rot emittierendes Leuchtpigment mit rotem Eisenoxid zu ummanteln. Insbesondere
sollte ohne Verwendung eines Bindemittels eine möglichst
dünne, fest haftende, die gesamte Oberfläche des Leuchtpigments bedeckende Ummantelung erreicht werden.

Diese Aufgabe wird erfindungsgemäß durch ein Verfahren
gelöst, bei dem auf einem rot emittierenden Leuchtpigment
in wäßriger Suspension eine dünne Schicht von Pyrit erzeugt und dieses nach Abtrennung des so ummantelten
Leuchtpigmentes von der wäßrigen Phase durch Abrösten
in rotes Eisenoxid (Hämatit) überführt wird.

Durch dieses Verfahren wird ein ummanteltes Leuchtpigment hergestellt, bei dem die Oberfläche der Leuchtpigmentteilchen gleichmäßig mit einer geschlossenen, extrem fest haftenden Filterpigmentschicht von reinem roten Eisenoxid (Hämatit) ummantelt ist.

Das ist umso erstaunlicher, weil bei Versuchen, auf rot emittierende Leuchtpigmente Eisen(II)hydroxid aufzufällen und dieses zu rotem Eisenoxid zu oxidieren, in den meisten Fällen nur braunes Eisen(II)oxid erhalten wurde.

Weiterhin ist überraschend, daß bei der Erzeugung von Pyrit und der anschließenden Oxidation zu Hämatit keine Eisenionen in die Leuchtpigmentkristalle wandern. Es tritt somit auch keine Minderung der Strahlungsausbeute durch einen Killer-Effekt ein.

Unerwartet war darüberhinaus, daß dieses Verfahren nicht nur zur Ummantelung von Leuchtpigmenten auf Basis von Oxiden, Vanadaten und Phosphaten geeignet ist, sondern auch von solchen auf Basis von Oxisulfiden. Bei der für die Umwandlung von Pyrit in rotes Eisenoxid erforderlichen Temperaturbehandlung wird der Schwefel im Leuchtpigment nicht angegriffen. Vermutlich wird diese an sich mögliche Oxidationsreaktion, die zu einer Helligkeitsminderung führen würde, durch Pyrit verhindert.

Als Leuchtpigmente, die nach dem erfindungsgemäßen Verfahren ummantelt werden können, kommen alle rot emittierenden Leuchtpigmente in Betracht, z.B. Mangan-aktiviertes Magnesiumfluorarsenat oder -fluorgermanat und Kupfer- oder Silber-aktivierte Zinkcadmiumsulfide. Insbesondere lassen sich mit dreiwertigem Europium aktivierte Oxide, Oxisulfide oder Vanadate des Yttriums, Lanthans oder Gadoliniums verwenden.

In einer besonderen bevorzugten Ausführungsform des Verfahrens wird eine Suspension eines rot emittierenden Leuchtpigmentes in einer wäßrigen Polysulfid-Lösung mit einer Eisen(II)-Ionen enthaltenden Lösung versetzt und auf eine Temperatur von 80 bis 100°C, vorzugsweise 85 bis 95°C, erwärmt, bis sich das auf die Leuchtpigment-Teilchen aufgefällte schwarze Eisen(II)sulfid in grauen Pyrit umgewandelt hat, und das so mit Pyrit ummantelte Leuchtpigment von der wäßrigen Phase abgetrennt, getrocknet und in oxidierender Atmosphäre auf eine Temperatur von über 250°C erhitzt, bis sich das Pyrit in rotes Eisenoxid (Hämatit) umgesetzt hat. Die Erwärmung der Suspension auf 80 bis 100°C erfolgt vorzugsweise unter ständiger Bewegung, z.B. durch Rühren.

Die Stärke der Ummantelung und damit die Helligkeit und das Reflexionsvermögen des ummantelten Leuchtpigments lassen sich durch die Menge der zuzusetzenden Eisen(II)-Ionen steuern. Brauchbare Resultate wurden bei Zusatzmengen von 0,35 - 5,0 g Eisen(II)-Ionen pro 100 g Leuchtpigment erhalten.

Die Stärke der Ummantelung läßt sich bei Annahme idealer Verhältnisse aus der Beziehung I

$$\frac{M_2}{M_1} = \frac{D_2}{D_1} \cdot \frac{(r + d)^3 - r^3}{r^3} \qquad (I)$$

ermitteln, worin bedeutet:

$M_1$ = Menge des zu ummantelnden Leuchtpigments (g)

$M_2$ = Menge des ummantelnden Fiterpigments (g)

$D_1$ = Dichte des Leuchtpigments ($g/cm^3$)

$D_2$ = Dichte des Filterpigments ($g/cm^3$)

$r$ = Teilchenradius des Leuchtpigments ($\mu m$)

$d$ = Dicke der Ummantelung ($\mu m$)

Setzt man näherungsweise $D_1 = D_2$ und $r = 5$ µm (die in der Farbfernsehtechnik verwendeten Leuchtpigmente haben üblicherweise Teilchendurchmesser von 8 - 20 µm), so ergibt sich für einen Zusatz von 0,35 g Fe(II)-Ionen zu 100 g Leuchtpigment eine Dicke der Ummantelung von 0,007 µm und für einen Zusatz von 5 g Fe(II)-Ionen eine Dicke der Ummantelung von 0,1 µm.

Als Eisen(II)-Ionen liefernde Salze werden vor allem Eisen(II)-sulfat-Heptahydrat und Ammoniumeisen(II)sulfat verwendet.

Die Reihenfolge der Zugabe von Eisen(II)-Ionen und Polysulfid ist nicht kritisch. So kann das Leuchtpigment auch in Wasser suspendiert und dann mit Eisen(II)-Ionen-Lösung und danach mit einer Polysulfid enthaltenden Lösung versetzt werden.

Als Polysulfid-Lösung, in der das zu ummantelnde Leuchtpigment suspendiert wird, kommen Alkalipolysulfid-Lösungen und insbesondere Ammoniumpolysulfid-Lösungen in Betracht. Die Konzentration der Polysulfid-Lösung ist nicht kritisch. Die Verwendung von Lösungen mit einem Gehalt von ca. 1 Gew.-% Polysulfid hat sich bewährt. Die Menge des anzuwendenden Polysulfids soll für die Ausfällung der eingesetzten Eisen(II)-Ionen ausreichen. Größere Überschüsse sind aus wirtschaftlichen Gründen unangebracht. Die Menge der Suspensionsflüssigkeit ist so zu wählen, daß die Suspension gut rührfähig ist. Eine Menge von 500 - 1000 ml Polysulfid-Lösung pro 100 g Leuchtpigment hat sich bewährt.

Wenn das erfindungsgemäße Verfahren zur Herstellung eines ummantelten Leuchtpigments auf Basis eines Oxisulfids angewendet wird, ist es erforderlich, die Suspension durch Zugabe von Säure auf einen pH-Wert von < 8, bevorzugt von 6-7, einzustellen. Wird nämlich die Auffällung der Eisen(II)-Ionen in einem stärker basischen Medium

001341C

von pH-Wert >8 vorgenommen, so kommt es zur Bildung basischer Eisensulfide, die bei der oxidierenden Temperaturbehandlung nicht zu dem gewünschten roten Eisenoxid (Hämatit), sondern nur zu braunen Eisenoxiden umgewandelt werden. Geeignete Säuren sind insbesondere anorganische Säuren, z.B. Salzsäure und Schwefelsäure.

Insbesondere lassen sich im Zuge der Herstellung von Oxisulfid-Leuchtpigmenten anfallende Zwischenstufen für die Ummantelung verwenden. So fällt nach dem Glühprozeß von Seltene-Erdmetall-Oxisulfiden ein Glühkuchen an, der neben dem Leuchtpigment überschüssiges Polysulfid enthält. Dieser Glühkuchen kann nach Mahlung direkt in Wasser suspendiert und ohne weiteren Polysulfid-Zusatz nach Einstellung des pH-Wertes auf <8, insbesondere auf 6-7, mit Eisen(II)-Ionen versetzt und wie beschrieben aufgearbeitet werden.

Nach dem erfindungsgemäßen Verfahren lassen sich auf sehr einfache Weise rot emittierende, mit rotem Eisenoxid ummantelte Filterleuchtpigmente mit deutlich verbesserten Eigenschaften herstellen. Von besonderem Vorteil erweist es sich, daß nach diesem Verfahren die Oberfläche der Leuchtpigmentkristalle gleichmäßig mit einer extrem fest haftenden Farbpigmentschicht umhüllt sind. Damit treten die bei den heute üblichen Verfahren oft vorhandenen Beschichtungsschwierigkeiten mit abgelösten Filterpigmentteilchen nicht mehr auf. Auch die damit verbundene Änderung der optischen Eigenschaften der Filterleuchtpigmente entfällt.

Weiterhin ist als Vorteil anzusehen, daß mit diesem Verfahren eine geschlossene Umhüllung der Leuchtpigment-Teilchen mit dem Filterpigment erreicht wird, wie sie durch Umhüllung mit diskreten Pigmenteilchen, z.B. unter Verwendung von Bindemitteln, nicht zu erhalten ist.

0013410

Das erfindungsgemäß erhaltene ummantelte Leuchtpigment eigent sich in besonderem Maße zur Anwendung als Filterleuchtpigment in Kathodenstrahlröhren, vorzugsweise in Farbfernsehbildröhren.

Die Erfindung wird anhand folgender Beispiele näher erläutert:

Beispiel 1

In 1000 ml Wasser werden 21 g Ammoniumsulfid-Lösung (40 Gew.-%) und 4 g Schwefelblüte eingerührt. In dieser Lösung werden 200 g rotes Leuchtpigment auf Basis Europium (III)-aktivierten Yttriumoxids suspendiert. Die Suspension wird mit einer Lösung von 35 g Eisen(II)-sulfat-7-hydrat in 50 ml Wasser versetzt und unter Rühren auf 90°C erhitzt, bis sich die anfangs auf das Leuchtpigment aufgefällten schwarzen Eisensulfide in grauen Pyrit umgewandelt haben. Der mit Pyrit umhüllte Leuchtstoff wird abfiltriert, mit destilliertem Wasser ionenfrei gewaschen und getrocknet. Anschließend wird das Produkt bei Temperaturen über 250°C in oxidierender Atmosphäre getempert, bis sich die graue Pyritumhüllung in eine rote Hämatitumhüllung umgewandelt hat. Die Ummantelung beträgt in diesem Fall 5 Gew.-% des Leuchtpigmentes.

In gleicher Weise wurden in gesonderten Ansätzen folgende roten Leuchtpigmente ummantelt

a) Mangan-aktiviertes Magnesiumfluorgermanat
b) Kupfer-aktiviertes Zinkcadmiumsulfid
c) Europium(III)-aktiviertes Yttriumvanadat
d) Europium(III)-aktiviertes Lanthanoxid
e) Europium(III)-aktiviertes Gadoliniumoxid

In allen Fällen wurden mit sehr fest haftenden Überzügen von rotem Eisenoxid ummantelte Leuchtpigmente erhalten.

Beispiel 2

200 g rotes Leuchtpigment auf Yttrium-Europium-Oxid-Basis mit einer Teilchengröße von 8 - 12 µm werden in 1000 ml Wasser suspendiert und nacheinander 35 g Eisen(II)-sulfat-7-hydrat, 21 g Ammoniumsulfidlösung 40-%ig und 4 g Schwefel-blüte eingerührt. Die Suspension wird nun solange auf 90°C erhitzt, bis sich die anfangs auf das Leuchtpigment aufgefällten schwarzen Eisensulfide in grauen Pyrit umgewandelt haben. Der mit Pyrit umhüllte Leuchtstoff wird abfiltriert, mit destilliertem Wasser ionenfrei gewaschen und getrocknet. Anschließend wird das Produkt bei Temperaturen über 250°C in oxidierender Atmosphäre getempert, bis sich die graue Pyritumhüllung in eine rote Hämatitumhüllung umgewandelt hat. Die Ummantelung beträgt in diesem Fall 5 Gew.-% des Leuchtpigmentes.

Beispiel 3

2000 g einer Suspension, wie sie durch Naßmahlung auf eine Teilchengröße von 10 - 15 µm des Schmelzkuchens bei der Herstellung eines roten Leuchtpigmentes auf Basis von Yttrium-Europium-Oxisulfid entsteht, die etwa 10 Gew.-% Leuchtpigment und überschüssiges Natriumpolysulfid enthält, werden mit 17,5 g Eisen(II)-sulfat-7-hydrat versetzt und erhitzt. Dabei wird der pH-Wert der Suspension durch Zugabe von Salzsäure auf 6,5 - 7,0 gehalten. Wenn sich die anfangs auf das Leuchtpigment aufgefällten Eisensulfide in Pyrit umgewandelt haben, wird wie in Beispiel 1 beschrieben gewaschen, getrocknet und anschließend bei Temperaturen über 250°C getempert. Die Ummantelung beträgt in diesem Fall 2,5 Gew.-% des Leuchtpigmentes.

Patentansprüche:

1. Verfahren zur Herstellung eines mit rotem Eisenoxid ummantelten, rot emittierenden Leuchtpigmentes, dadurch gekennzeichnet, daß auf einem rot emittierenden Leuchtpigment in wäßriger Suspension eine dünne Schicht von Pyrit erzeugt und dieses nach Abtrennung des so ummantelten Leuchtpigmentes von der wäßrigen Phase durch Abrösten in rotes Eisenoxid (Hämatit) überführt wird.

2. Verfahren nach Anspruch 1, dadurch gekennzeichnet, daß eine Suspension eines rot emittierenden Leuchtpigmentes in einer wäßrigen Polysulfid-Lösung mit einer Eisen(II)-ionen enthaltenden Lösung versetzt und auf eine Temperatur von 80 bis 100°C erwärmt wird, bis sich das auf die Leuchtpigment-Teilchen aufgefällte schwarze Eisensulfid in grauen Pyrit umgewandelt hat, und das so ummantelte Pigment von der wäßrigen Phase abgetrennt, getrocknet und in oxidierender Atmosphäre auf eine Temperatur von über 250°C erhitzt wird, bis sich das Pyrit in rotes Eisenoxid (Hämatit) umgesetzt hat.

3. Verfahren nach Anspruch 2, dadurch gekennzeichnet, daß als Leuchtpigmente mit dreiwertigem Europium aktivierte Oxide, Oxisulfide oder Vanadate des Yttriums, Lanthans oder Gadoliniums verwendet werden.

4. Verfahren nach Anspruch 2, dadurch gekennzeichnet, daß pro 100 g Leuchtpigment 0,35 - 5,0 Eisen(II)-Ionen zugesetzt werden.

5. Verfahren nach Anspruch 2, dadurch gekennzeichnet, daß pro 100 g Leuchtpigment 500 - 1000 g einer Lösung mit einem Gehalt von ca. 1 Gew.-% Polysulfid verwendet werden.

001341C

6.  Verfahren nach Anspruch 2, dadurch gekennzeichnet, daß als Polysulfidlösung eine Ammoniumpolysulfidlösung verwendet wird.

7.  Verfahren nach Anspruch 3, dadurch gekennzeichnet, daß zur Herstellung eines ummantelten Leuchtpigments auf Basis eines Europium-aktivierten Yttrium-, Lanthan- oder Gadoliniumoxisulfides die Suspension vor Zugabe der Eisen(II)-Ionen durch Zugabe von Säure auf einen pH-Wert von <8, insbesondere von 6 - 7, eingestellt wird.

8.  Verfahren nach Anspruch 7, dadurch gekennzeichnet, daß zur Herstellung eines ummantelten Leuchtpigmentes auf Basis eines Europium-aktivierten Yttrium-, Lanthan oder Gadoliniumoxisulfides der bei der Herstellung dieser Leuchtpigmente nach dem Glühprozeß anfallende, überschüssiges Polysulfid enthaltende Glühkuchen in Wasser suspendiert wird und die Suspension vor Zugabe der Eisen(II)-Ionen durch Zugabe von Säure auf einen pH-Wert von <8, insbesondere von 6 bis 7, eingestellt wird.

9.  Verwendung eines nach Anspruch 1 - 8 hergestellten, mit rotem Eisenoxid ummantelten, rot emittierenden Leuchtpigments in Kathodenstrahlröhren, insbesondere in Farbfernsehbildröhren.

0013410

**Europäisches Patentamt**

**EUROPÄISCHER RECHERCHENBERICHT**

Nummer der Anmeldung

EP 79 10 5323

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 723 495 (GTE SYLVANIA INC.)<br><br>✱ Ansprüche 1,12; Seite 5, Absätze 1,2; Seite 9, Absatz 2; Seite 11, Absatz 3 ✱ | 1,3,4,9 |
| A | PATENT ABSTRACTS OF JAPAN, Band 2, Nr. 76 (16.6.1978), Unexamined Applications C-Section (The Patent Office Japanese Government), Seite 962 C 78 (C15)<br><br>& JP - A - 53 34689 (DAINIPPON TORYO K.K.)<br><br>✱ Vollständige Zusammenfassung ✱ | 1,3,9 |
| DA | DE - A - 2 702 491 (R.C.A. CORP.)<br><br>✱ Ansprüche 1,2; Beispiel 1 ✱ | 1-3 |
| E | NL - A - 79 07195 (HITACHI LTD.)<br><br>✱ Ansprüche 1-5,8; Seite 1, Absätze 1,2; Seite 2, Absatz 5 ✱ | 1,3,4,9 |
| P | FR - A - 2 408 641 (HITACHI LTD.)<br><br>✱ Anspruch 1; Seite 1, Absatz 1; Seiten 8,9; Beispiel 1 ✱ | 1,3,9 |
| E | & NL - A - 78 11079<br>GB - A - 2 009 218<br>DE - A - 2 848 312 | |
| EP | NL - A - 78 02409 (DAINIPPON TORYO CO.)<br>✱ Anspruch 6 ✱ | 1,9 |

### KLASSIFIKATION DER ANMELDUNG (Int.Cl. 1)

C 09 K 11/02
      11/477
H 01 J 9/227
      29/32

### RECHERCHIERTE SACHGEBIETE (Int. Cl. 3)

C 09 K 11/02
H 01 J 9/227
      9/22

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-04-1980 | DECANNIERE |

EPA form 1503.1  06.78